# EUROPEAN PATENT APPLICATION

(11) **EP 4 567 949 A1**
(43) Date of publication of application: **11.06.2025**
(21) Application number: 24217696.4
(22) Date of filing: 05.12.2024
(51) Int. Cl.: H01M 10/04, H01M 50/103, H01M 50/528, H01M 50/533, H01M 50/536, H01M 50/538, H01M 50/54, H01M 50/55, H01M 50/553, H01M 50/586, H01M 50/593

(54) **BATTERY CELL AND METHOD OF MANUFACTURING THE SAME**

(30) Priority: 07.12.2023 KR 20230176554; 22.11.2024 KR 20240168874
(71) Applicant: SK On Co., Ltd., Seoul 03161 (KR)
(72) Inventor: KWAK, Seung Ho, 34124 Daejeon (KR); CHEONG, Hoemin, 34124 Daejeon (KR); JU, Seung Hoon, 34124 Daejeon (KR)
(74) Representative: Prüfer & Partner mbB Patentanwälte · Rechtsanwälte

(57) **Abstract**

The present disclosure relates to a battery cell and a method of manufacturing the same. According to the battery cell and the method of manufacturing the same, an electrode plate of the battery cell is coupled to an insulating member having a groove formed therein, and a portion of the electrode plate which fills the groove is formed to be in contact with an electrode tab, thereby electrically connecting the electrode tab of the battery cell and a current collector more stably.

## Description

### BACKGROUND OF THE INVENTION

### 1. Field

Embodiments of the present disclosure relate to a battery cell and a method of manufacturing the same, and more particularly, to a battery cell and a method of manufacturing the same capable of improving electrical connection stability between an electrode tab and an electrode plate and simplifying a manufacturing process.

### 2. Description of the Related Art

Among battery cells, a battery cell which can be charged and discharged may be used in a small portable electronic device such as a mobile phone or a camcorder or a plurality of the battery cells may be connected and used as a power source for a drive motor of a hybrid car, for example.

These battery cells are manufactured in various shapes, among which a square battery cell is generally configured to house an electrode assembly including alternately stacked positive and negative plates and an electrolyte together in a case, house a current collector electrically connected to electrode tabs formed in the electrode assembly in the case, and then install a cap assembly to seal the case to the case. Here, the current collector and the cap assembly are also electrically connected, so the electrode assembly is electrically connected to the cap assembly through the current collector.

Further, in a conventional square battery cell, since an insulator is installed between the electrode tab and the current collector, in order to electrically connect the electrode tab in contact with one side of the insulator and the current collector in contact with the other side of the insulator, a part of the electrode tab protruding between the insulator and the current collector should be folded to contact the current collector and welded, for example.

However, when the electrode tab and the current collector are coupled in this way, only a part of an end of the electrode tab is in contact with the current collector, so the contact and coupling area between the electrode tab and the current collector is relatively small. In other words, electrical connection between the electrode tab and the current collector is not stable.

In addition, in order to manufacture a battery cell in which a separate insulator is installed between the electrode tab and the current collector, a separate process is required to install the insulator between the electrode tab and the current collector, which may make the manufacturing process of the battery cell relatively complex.

Therefore, there is a need to develop a battery cell in which the electrode tab and the current collector may be electrically more stably connected and which may be manufactured with a more simplified manufacturing process and a method of manufacturing the same.

### SUMMARY OF THE INVENTION

One aspect of the present disclosure provides a battery cell in which an electrode tab and a current collector may be electrically more stably connected and a method of manufacturing the same.

Another aspect of the present disclosure provides a battery cell which may be manufactured by a more simplified process and a method of manufacturing the same.

A battery cell of the present disclosure may be widely applied in green technology fields using batteries such as electric vehicles. In addition, the battery cell of the present disclosure may be used in eco-friendly electric vehicles, hybrid vehicles, etc. to prevent climate change by suppressing air pollution and greenhouse gas emissions.

As a technical means to achieve the technical objects, a battery cell according to an embodiment of the present disclosure includes a case with one side open and an accommodation space formed inside, an electrode assembly including a plurality of first electrodes electrically connected to a first electrode tab and a plurality of second electrodes electrically connected to a second electrode tab, which are alternately stacked, and disposed in the accommodation space, a current collector including a first electrode plate electrically connected to the first electrode tab and a second electrode plate electrically connected to the second electrode tab, and disposed in the accommodation space, and a cap assembly coupled to the one side of the case to seal the accommodation space and exposing at least a part of the first electrode plate and at least a part of the second electrode plate, wherein the first electrode tab may be coupled to the electrode assembly so as to be disposed on a predetermined surface facing the current collector among a plurality of surfaces of the electrode assembly, and the second electrode tab may be coupled to the electrode assembly so as to be spaced apart from the first electrode tab by a predetermined distance and disposed on the predetermined surface of the electrode assembly.

In addition, the predetermined surface of the electrode assembly may be a surface facing the current collector.

In addition, the current collector may include an insulating member which is coupled to at least a part of the first electrode plate and at least a part of the second electrode plate.

In addition, the insulating member may be formed in a plate shape and have a first groove and a second groove formed therein, the first electrode plate may be coupled to the insulating member to fill the first groove, and the second electrode plate may be coupled to the insulating member to fill the second groove.

In addition, the first groove may be formed so that a portion of one surface of the first electrode plate which fills the first groove comes into contact with the first electrode tab, and the second groove may be formed so that a portion of one surface of the second electrode plate which fills the second groove comes into contact with the second electrode tab.

In addition, the first electrode tab may include a first electrode non-coating part of each of the first electrode plates, and the second electrode tab may include a second electrode non-coating part of each of the second electrode plates, the electrode assembly may include a plurality of the first electrode tabs and a plurality of the second electrode tabs, the plurality of first electrode non-coating parts of one or more of the plurality of first electrode tabs may be bent in a first direction in which the plurality of first electrode plates and the plurality of second electrode plates are stacked, and the plurality of first electrode non-coating parts of the remainder of the plurality of first electrode tabs may be bent in a second direction which is opposite to the first direction, and the plurality of second electrode non-coating parts of one or more of the plurality of second electrode tabs may be bent in the first direction, and the plurality of second electrode non-coating parts of the remainder of the plurality of second electrode tabs may be bent in the second direction.

In addition, a portion protruding from the predetermined surface of the plurality of first electrode non-coating parts may be bent so as to sandwich the first electrode plate and coupled to another surface of the first electrode plate, and a portion protruding from the predetermined surface of the plurality of second electrode non-coating parts may be bent so as to sandwich the second electrode plate and coupled to another surface of the second electrode plate.

In addition, a plurality of the electrode assemblies may be stacked to form an electrode assembly stack and placed in the accommodation space, the first electrode tab may include a first electrode non-coating part of each of the first electrode plates, and the second electrode tab may include a second electrode non-coating part of each of the second electrode plates, the first electrode tab of each of the electrode assemblies may be bent so that the plurality of first electrode non-coating parts move away from an edge of the electrode assembly stack, and the second electrode tab of each of the electrode assemblies may be bent so that the plurality of second electrode non-coating parts move away from an edge of the electrode assembly stack.

In addition, the electrode assembly stack may be formed such that the first electrode tab and the second electrode tab of an electrode assembly selected from the plurality of electrode assemblies are prevented from being opposed to the first electrode tab and the second electrode tab of the electrode assembly adjacent to the selected electrode assembly.

In addition, the first groove may be formed so that the entire portion of the one surface of the first electrode plate which fills the first groove comes into contact with the first electrode tab, and the second groove may be formed so that the entire portion of the one surface of the second electrode plate which fills the second groove comes into contact with the second electrode tab.

In addition, the first electrode plate may include a first coupling part including the portion filling the first groove, and a first terminal part formed by being connected to the first coupling part and having a first electrode protrusion formed to protrude in a direction toward the cap assembly, and the second electrode plate may include a second coupling part including the portion filling the second groove, and a second terminal part formed by being connected to the second coupling part and having a second electrode protrusion formed to protrude in a direction toward the cap assembly.

In addition, the first electrode protrusion may be formed to protrude from the first terminal part in a vertical direction, and the second electrode protrusion may be formed to protrude from the second terminal part in a vertical direction.

In addition, a length of the first terminal part in a direction perpendicular to one surface of the first electrode plate may be longer than a length of the first coupling part in a direction perpendicular to one surface of the first electrode plate, and a length of the second terminal part in a direction perpendicular to one surface of the second electrode plate may be longer than a length of the second coupling part in a direction perpendicular to one surface of the second electrode plate.

In addition, the length of the first coupling part in the direction perpendicular to the one surface of the first electrode plate and the length of the second coupling part in the direction perpendicular to the one surface of the second electrode plate may be 0.5 mm or less, and the length of the first terminal part in the direction perpendicular to the one surface of the first electrode plate and the length of the second terminal part in the direction perpendicular to the one surface of the second electrode plate may be 1 mm or less.

In addition, the first electrode plate may be formed so that the first terminal part is positioned further from the second electrode plate than the first coupling part, and the second electrode plate may be formed so that the second terminal part is positioned further from the first electrode plate than the second coupling part.

As a technical means to achieve the technical objects, a method of manufacturing a battery cell according to an embodiment of the present disclosure includes a first step of preparing an electrode assembly including a plurality of first electrodes electrically connected to a first electrode tab and a plurality of second electrodes electrically connected to a second electrode tab, which are alternately stacked, a second step of preparing a current collector which includes a first electrode plate and a second electrode plate, a third step of electrically connecting the first electrode tab and the first electrode plate and electrically connecting the second electrode tab and the second electrode plate to couple the electrode assembly and the current collector, and a fourth step of connecting a cap assembly including a first electrode terminal and a second electrode terminal to the current collector so that at least a part of the first electrode plate is exposed through the first electrode terminal and at least a part of the second electrode plate is exposed through the second electrode terminal, wherein the electrode assembly and the current collector ma be accommodated in an accommodation space of a case, and the cap assembly may be coupled to the case to seal the accommodation space, the first electrode tab may be coupled to the electrode assembly so as to be disposed on a predetermined surface facing the current collector of a plurality of surfaces of the electrode assembly, and the second electrode tab may be coupled to the electrode assembly so as to be spaced apart from the first electrode tab by a predetermined distance and disposed on the predetermined surface of the electrode assembly.

In addition, the current collector may include an insulating member coupled to at least a part of the first electrode plate and at least a part of the second electrode plate.

In addition, the insulating member may be formed in a plate shape and has a first groove and a second groove formed therein, the first electrode plate may be coupled to the insulating member to fill the first groove, and the second electrode plate may be coupled to the insulating member to fill the second groove.

In addition, the first groove may be formed so that a portion of one surface of the first electrode plate which fills the first groove comes into contact with the first electrode tab, and the second groove may be formed so that a portion of one surface of the second electrode plate which fills the second groove comes into contact with the second electrode tab.

In addition, the first groove may be formed so that the entire portion of the one surface of the first electrode plate which fills the first groove comes into contact with the first electrode tab, and the second groove may be formed so that the entire portion of the one surface of the second electrode plate which fills the second groove comes into contact with the second electrode tab.

In addition, the first electrode tab may include a first electrode non-coating part of each of the first electrode plates, and the second electrode tab may include a second electrode non-coating part of each of the second electrode plates, the electrode assembly may include a plurality of the first electrode tabs and a plurality of the second electrode tabs, the plurality of first electrode non-coating parts of one or more of the plurality of first electrode tabs may be bent in a first direction in which the plurality of first electrode plates and the plurality of second electrode plates are stacked, and the plurality of first electrode non-coating parts of the remainder of the plurality of first electrode tabs may be bent in a second direction which is opposite to the first direction, and the plurality of second electrode non-coating parts of one or more of the plurality of second electrode tabs may be bent in the first direction, and the plurality of second electrode non-coating parts of the remainder of the plurality of second electrode tabs may be bent in the second direction.

In addition, a portion protruding from the predetermined surface of the plurality of first electrode non-coating parts may be bent so as to sandwich the first electrode plate and coupled to another surface of the first electrode plate, and a portion protruding from the predetermined surface of the plurality of second electrode non-coating parts may be bent so as to sandwich the second electrode plate and coupled to another surface of the second electrode plate.

In addition, a plurality of the electrode assemblies may be stacked to form an electrode assembly stack and placed in the accommodation space, the first electrode tab may include a first electrode non-coating part of each of the first electrode plates, and the second electrode tab may include a second electrode non-coating part of each of the second electrode plates, the first electrode tab of each of the electrode assemblies may be bent so that the plurality of first electrode non-coating parts move away from an edge of the electrode assembly stack, and the second electrode tab of each of the electrode assemblies may be bent so that the plurality of second electrode non-coating parts move away from an edge of the electrode assembly stack.

In addition, the electrode assembly stack may be formed such that the first electrode tab and the second electrode tab of an electrode assembly selected from the plurality of electrode assemblies are prevented from being opposed to the first electrode tab and the second electrode tab of the electrode assembly adjacent to the selected electrode assembly.

Specific details of other embodiments for achieving the objects are included in the description of the invention and drawings.

According to an embodiment of the disclosure as described above, a battery cell and a method of manufacturing the same according to the present disclosure are configured such that a portion of an electrode plate coupled to an insulating member in which a groove is formed filling the groove is in contact with an electrode tab, providing an effect in which the contact area between the electrode tab and the electrode plate of the current collector is relatively increased, thereby enabling the electrode tab and the current collector to be electrically more stably connected.

In addition, an electrode tab formed by a non-coating part is bent in a predetermined direction and configured to be in stable contact with the current collector, thus providing effect of allowing the electrode tab and the current collector to be electrically more stably connected.

In addition, a battery cell may be manufactured without going through a process for installing an insulator between an electrode assembly and the current collector, thus providing an effect of manufacturing the battery cell through a more simplified process.

### BRIEF DESCRIPTION OF THE DRAWINGS

FIG. 1 is an exploded perspective view of a battery cell according to an embodiment of the present disclosure.
FIG. 2 is a perspective view illustrating a case.
FIG. 3 is a perspective view illustrating an electrode assembly.
FIG. 4 is a perspective view illustrating another example of the electrode assembly.
FIG. 5 is a diagram illustrating an electrode assembly including electrode tabs which are bent in opposite directions.
FIG. 6 is a diagram illustrating a first electrode tab bent in a first direction as viewed along a third direction.
FIG. 7 is a diagram illustrating a first electrode tab bent in a direction opposite to the first direction as viewed along the third direction.
FIG. 8 is a diagram illustrating an electrode assembly stack formed by stacking a plurality of electrode assemblies.
FIG. 9 is a diagram illustrating a first electrode tab of a first electrode assembly as viewed along the third direction.
FIG. 10 is a diagram illustrating a first electrode tab of a second electrode assembly as viewed along the third direction.
FIG. 11 is a perspective view illustrating a current collector.
FIG. 12 is a diagram illustrating a current collector so that one side of the current collector can be seen.
FIG. 13 is a diagram illustrating the current collector so that another side of the current collector can be seen.
FIG. 14 is a diagram illustrating the current collector so that a side perpendicular to one side and another side of the current collector can be seen.
FIG. 15 is a perspective view illustrating an electrode assembly to which a current collector is coupled.
FIG. 16 is a cross-sectional diagram of the electrode assembly of FIG. 15 cut along line A-A', viewed along an X direction.
FIG. 17 is a diagram illustrating a current collector coupled to an electrode assembly including electrode tabs which are bent in opposite directions.
FIG. 18 is a diagram illustrating a state in which a first electrode tab bent in the first direction and a first electrode plate are in contact.
FIG. 19 is a drawing illustrating a state in which a first electrode tab which is bent in a direction opposite to the first direction and a first electrode plate are in contact.
FIG. 20 is a diagram illustrating an electrode tab protruding from an electrode assembly being bent and coupled to an electrode plate.
FIG. 21 is a diagram illustrating a current collector being coupled to an electrode assembly stack formed by stacking a plurality of electrode assemblies.
FIG. 22 is a diagram illustrating a state in which a first electrode tab of a first electrode assembly and a first electrode plate are in contact.
FIG. 23 is a diagram illustrating a state in which a first electrode tab of a second electrode assembly and a first electrode plate are in contact.
FIG. 24 is a diagram illustrating a current collector coupled to an electrode assembly stack.
FIG. 25 is a perspective view illustrating a cap assembly.
FIG. 26 is a diagram illustrating a case to which a cap assembly is coupled.
FIG. 27 is an enlarged view of part B of FIG. 11 with a portion cut off.
FIG. 28 is a flowchart illustrating a method of manufacturing a battery cell according to an embodiment of the present disclosure.
FIG. 29 is a diagram illustrating a fifth step.
FIG. 30 is a diagram illustrating a sixth step.

### DETAILED DESCRIPTION

Hereinafter, referring to the accompanying drawings, embodiments of the present disclosure are described in detail so that those skilled in the art to which the present disclosure pertains can easily practice them. However, the present disclosure may be implemented in a number of different forms and is not limited to the embodiments described herein. Further, in order to clearly explain the present disclosure in the drawings, parts that are not related to the explanation are omitted, and similar parts are given similar reference numerals throughout the specification.

Throughout the specification, when it is mentioned that a part is "connected" to another part, it includes not only the case where they are "directly connected," but also the case where they are "electrically connected" with another element in between.

Throughout the specification, when it is mentioned that an element is "on" another element, this includes not only the case where the element is in contact with the other element, but also the case where there is another element between the two elements.

Throughout the specification, when it is mentioned that a part "includes" or "comprises" a component, this does not mean that it excludes other components, but rather that it may include other components, unless otherwise specifically stated. The terms such as "about" and "substantially", which indicate degrees, as used throughout the specification, are used in a meaning that is at or near a numerical value when manufacturing and material tolerances inherent in the meanings stated are given, and are used to prevent unscrupulous infringers from unfairly exploiting the disclosure, which states precise or absolute numbers to aid understanding of the present disclosure. The terms "step of doing ~" or "step of ~" as used throughout the specification do not mean "step for ~".

Hereinafter, with reference to the accompanying drawings and the description below, preferred embodiments of the present disclosure are described in detail. However, the present disclosure is not limited to the embodiments described here, but may be embodied in other forms. Throughout the specification, the same reference numerals represent the same components.

In the following, a battery cell according to an embodiment of the present disclosure will be described.

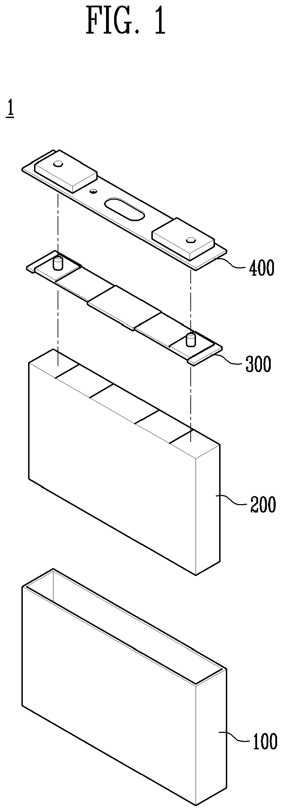

FIG. 1 is an exploded perspective view of a battery cell according to an embodiment of the present disclosure.

Referred to FIG. 1, a battery cell 1 includes a case 100, an electrode assembly 200, a current collector 300, and a cap assembly 400.

First, the case 100 is described.

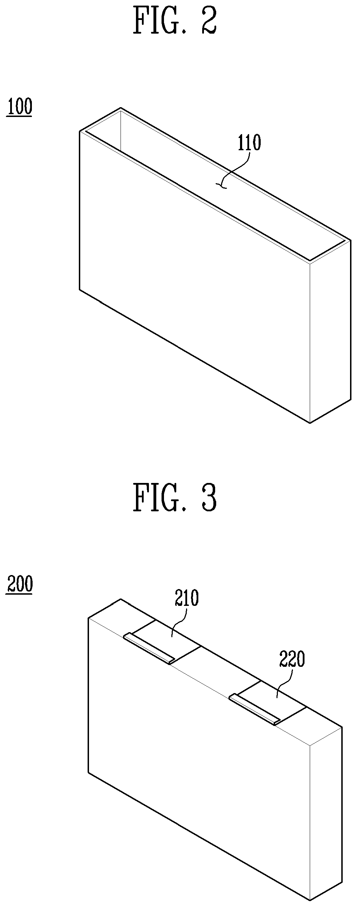

FIG. 2 is a perspective view illustrating a case.

Referring to FIG. 2, the case 100 may have one side open and an accommodation space 110 formed inside.

The accommodation space 110 formed in the case 100 may accommodate the electrode assembly 200 and the current collector 300 which will be described later, and the case 100 may be made of the same material as the cap assembly 400 which will be described later.

Then, the electrode assembly 200 is described.

FIG. 3 is a perspective view illustrating an electrode assembly.

Referring to FIG. 3, the electrode assembly 200 may include a plurality of first electrodes electrically connected to a first electrode tab 210 and a plurality of second electrodes electrically connected to a second electrode tab 220, wherein the plurality of first electrodes and the plurality of second electrodes are alternately stacked.

The first electrode may act as a cathode, and when the first electrode acts as the cathode, the first electrode may be formed by applying a first electrode active material, such as a transition metal oxide, to a first electrode current collector formed of a metal foil, such as aluminum.

Further, the first electrode includes a first electrode non-coating part, which is an area where the first electrode active material is not applied, and the first electrode non-coating part may be a passage for current flow between the first electrode and the outside and may also form the first electrode tab 210.

The second electrode may act as an anode, and when the second electrode acts as the anode, the second electrode may be formed by applying a second electrode active material, such as graphite or carbon, to a second electrode current collector formed of a metal foil, such as copper or nickel.

Further, the second electrode includes a second electrode non-coating part, which is an area where the second electrode active material is not applied, and the second electrode non-coating part may serve as a passage for current flow between the second electrode and the outside and may also form the second electrode tab 220.

The plurality of first electrodes and the plurality of second electrodes formed as described above are alternately stacked and included in the electrode assembly 200, and the electrode assembly 200 is accommodated in the accommodation space 110 of the case 100 together with an electrolyte.

Here, as shown in FIG. 3, the first electrode tab 210 formed as the first electrode non-coating part or formed as a separate member may be coupled to the electrode assembly 200 so as to be disposed on a predetermined surface of a plurality of surfaces of the electrode assembly 200.

The second electrode tab 220 formed as the second electrode non-coating part or formed as a separate member may be coupled to the electrode assembly 200 so as to be spaced apart from the first electrode tab 210 by a predetermined distance but disposed on a predetermined surface of the electrode assembly 200.

Here, the predetermined surface of the electrode assembly 200 may be a surface facing the current collector 300 described later.

In addition, the outer surface of the electrode assembly 200 may be covered with an insulator, except for a portion where the current collector 300 is coupled.

In addition, the electrode assembly 200 may include the first electrode tab 210 and the second electrode tap 220 which are freely bendable.

For example, as illustrated in FIG. 3, the electrode assembly 200 may include the first electrode tab 210 and the second electrode tab 220 which are bent toward a same direction.

At this time, two or more first electrode tabs 210 may be formed, and two or more second electrode tabs 220 may also be formed.

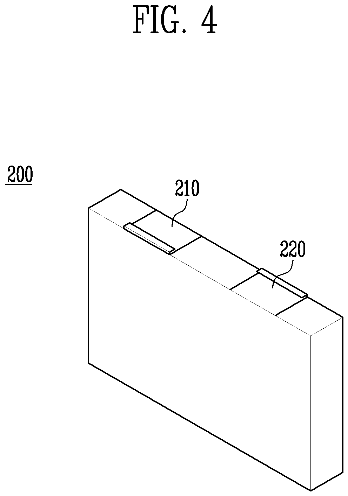

FIG. 4 is a perspective view illustrating another example of the electrode assembly.

As shown in FIG. 4, the electrode assembly 200 may include the first electrode tab 210 and the second electrode tab 220 which are bent in opposite directions.

Two or more first electrode tabs 210 may be formed, and two or more second electrode tabs 220 may also be formed.

In other words, directions in which the first electrode tab(s) 210 and the second electrode tab(s) 220 included in the electrode assembly 200 are bent are not particularly limited and the number of the first electrode tabs 210 and the number of the second electrode tabs 220 are not particularly limited.

The electrode assembly 200 may be configured to enable a more stable electrical connection with the current collector 300.

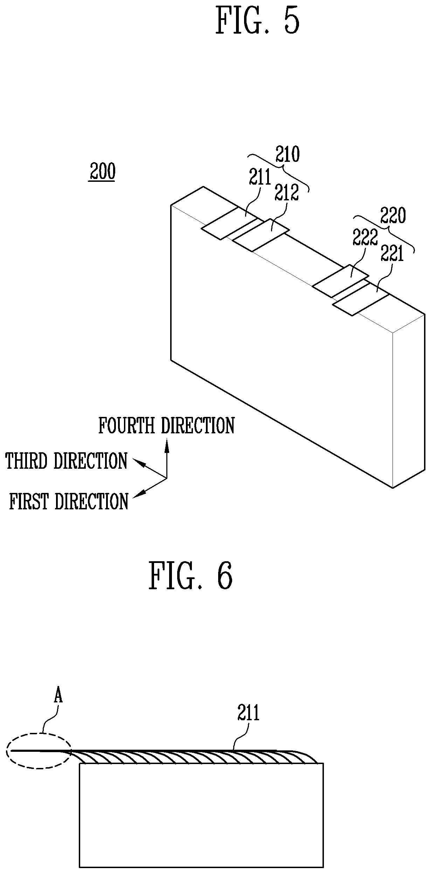

FIG. 5 is a diagram illustrating an electrode assembly including electrode tabs which are bent in opposite directions.

For example, as shown in FIG. 5, the electrode assembly 200 may be configured to include a plurality of the first electrode tabs 210 and a plurality of the second electrode tabs 220.

The first electrode tab 210 may include the first electrode non-coating part of each first electrode, and the second electrode tab 220 may include the second electrode non-coating part of each second electrode.

A plurality of first non-coating parts of one or more of the plurality of first electrode tabs 210 may be bent in a first direction in which the plurality of first electrodes and the plurality of second electrodes are stacked, and a plurality of first non-coating parts of the remainder of the plurality of first electrode tabs 210 may be bent in a second direction which is opposite to the first direction.

FIG. 6 is a diagram illustrating a first electrode tab bent in the first direction as viewed along a third direction.

For example, as shown in FIG. 6, a plurality of first electrode non-coating parts of any one first electrode tab 211 may be bent in the first direction in which the plurality of first electrodes and the plurality of second electrodes are stacked.

By bending the plurality of first electrode non-coating parts in the first direction, first electrode non-coating parts (A) extending from first electrodes arranged adjacent to an end in the first direction of the electrode assembly 200 among the plurality of first electrodes may protrude in the first direction from a predetermined surface of the electrode assembly 200.

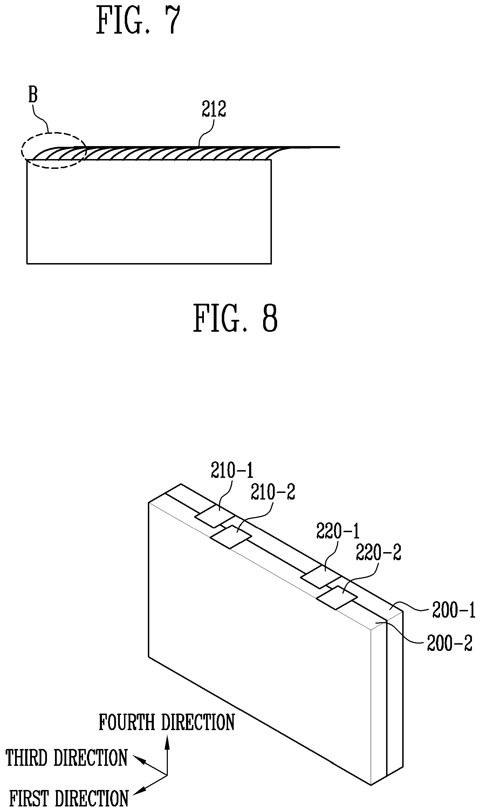

FIG. 7 is a diagram illustrating a first electrode tab bent in a direction opposite to the first direction as viewed along the third direction.

As shown in FIG. 7, a plurality of first electrode non-coating parts of another first electrode tab 212 may be bent in the second direction, which is the opposite direction of the first direction.

By bending the plurality of first electrode non-coating parts in the second direction, first electrode non-coating parts (B) extending from first electrodes arranged adjacent to an end in the first direction of the electrode assembly 200 among the plurality of first electrodes may be placed on a predetermined surface of the electrode assembly 200.

Further, a plurality of second non-coating parts of one or more of the plurality of second electrode tabs 220 may be bent in the first direction, and a plurality of second non-coating parts of the remainder of the plurality of second electrode tabs 220 may be bent in the second direction.

The principle of configuring the plurality of second electrode tabs 220 to be bent in opposite directions is the same as the principle of configuring the plurality of first electrode tabs 210 to be bent in opposite directions, so a detailed description is omitted.

FIG. 8 is a diagram illustrating an electrode assembly stack formed by stacking a plurality of electrode assemblies.

For another example, referring to FIG. 8, a plurality of the electrode assemblies 200 may be stacked to form an electrode assembly stack and placed in the accommodation space 110.

FIG. 8 shows that a first electrode assembly 200-1 and a second electrode assembly 200-2 are stacked, but the number of electrode assemblies 200 forming the electrode assembly stack is not limited to two.

Further, as shown in FIG. 8, the electrode assembly stack may be formed such that the first electrode tab 210 and the second electrode tab 220 of an electrode assembly 200 selected from the plurality of electrode assemblies 200 are prevented from being opposed to the first electrode tab 210 and the second electrode tab 220 of an electrode assembly 200 adjacent to the electrode assembly 200.

Each electrode assembly 200 may be configured so that the first electrode tab 210 includes the first electrode non-coating part of each first electrode and the second electrode tab 220 includes the second electrode non-coating part of each second electrode.

For example, a first electrode tab 210-1 of the first electrode assembly 200-1 may include the first electrode non-coating part of each first electrode of the first electrode assembly 200-1, and a second electrode tab 220-1 of the first electrode assembly 200-1 may include the second electrode non-coating part of each second electrode of the first electrode assembly 200-1.

Similarly, a first electrode tab 210-2 of the second electrode assembly 200-2 may include the first electrode non-coating part of each first electrode of the second electrode assembly 200-2, and a second electrode tab 220-2 of the second electrode assembly 200-2 may include the second electrode non-coating part of each second electrode of the second electrode assembly 200-2.

The first electrode tab 210 of each electrode assembly 200 may be bent so that the plurality of first electrode non-coating parts move away from an edge of the electrode assembly stack.

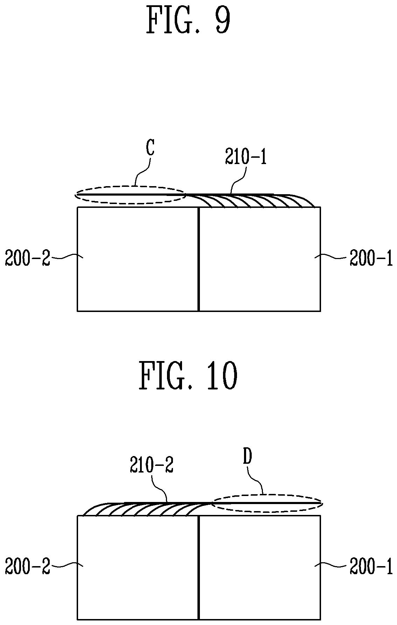

FIG. 9 is a diagram illustrating the first electrode tab of the first electrode assembly as viewed along the third direction.

As shown in FIG. 9, the first electrode tab 210-1 of the first electrode assembly 200-1 may be bent such that the plurality of first electrode non-coating parts move away from an edge of the electrode assembly stack.

By bending the plurality of first electrode non-coating parts away from the edge of the electrode assembly stack, first electrode non-coating parts (C) extending from first electrodes arranged adjacent to the second electrode assembly 200-2 among the plurality of first electrodes of the first electrode assembly 200-1 may be arranged on a predetermined surface of the second electrode assembly 200-2.

FIG. 10 is a diagram illustrating the first electrode tab of the second electrode assembly as viewed along the third direction.

As shown in FIG. 10, the first electrode tab 210-2 of the second electrode assembly 200-2 may be bent such that the plurality of first electrode non-coating parts move away from an edge of the electrode assembly stack.

By bending the plurality of first electrode non-coating parts away from the edge of the electrode assembly stack, first electrode non-coating parts (D) extending from the first electrodes arranged adjacent to the first electrode assembly 200-1 among the plurality of first electrodes of the second electrode assembly 200-2 may be arranged on a predetermined surface of the first electrode assembly 200-1.

Further, the second electrode tab 220 of each electrode assembly 200 may be bent such that the plurality of second electrode non-coating parts move away from an edge of the electrode assembly stack.

The principle by which the second electrode tab 220 of each electrode assembly 200 is configured to be bent in a direction away from the edge of the electrode assembly stack is the same as the principle by which the first electrode tab 210 of each electrode assembly 200 is configured to be bent in a direction away from the edge of the electrode assembly stack, and therefore a detailed description is omitted.

Next, the current collector 300 is described.

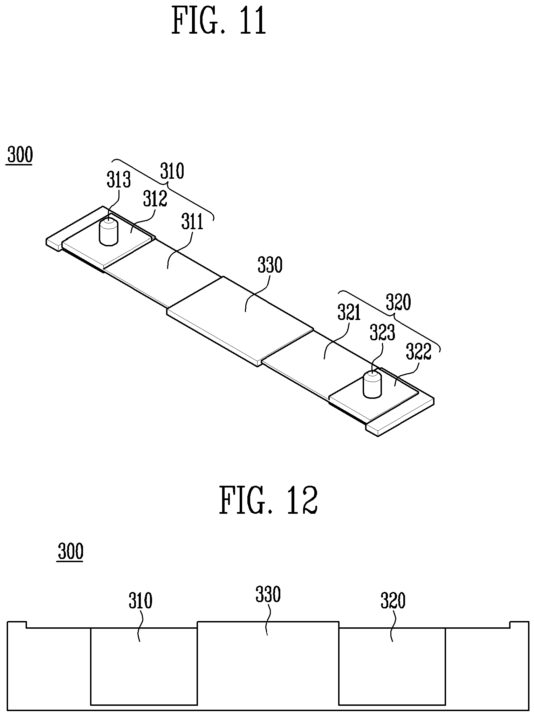

FIG. 11 is a perspective view illustrating a current collector.

Referred to FIG. 11, the current collector 300 includes a first electrode plate 310, a second electrode plate 320, and an insulating member 330, and is coupled with a part of the electrode assembly 200 exposed to one side of the case 100 and disposed in the accommodation space 110.

The first electrode plate 310 and the second electrode plate 320 are formed from a conductor such as metal, and are each bonded to the insulating member 330.

The insulating member 330 is formed of a material capable of performing an insulating function and is coupled with at least part of the first electrode plate 310 and at least part of the second electrode plate 320.

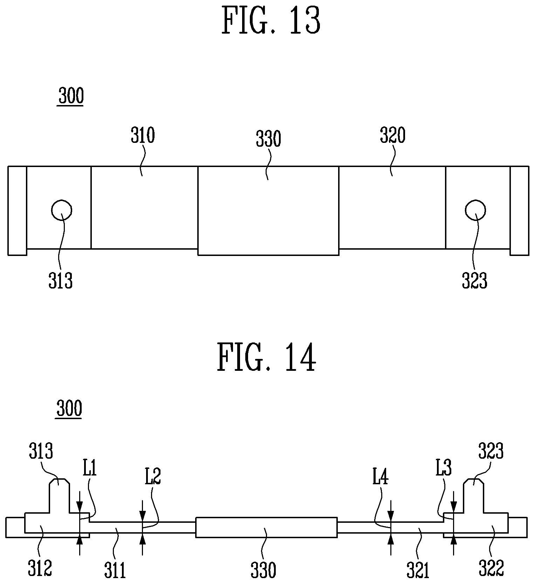

FIG. 12 is a diagram illustrating a current collector so that one side of the current collector can be seen, and FIG. 13 is a diagram illustrating the current collector so that another side of the current collector can be seen.

Specifically, the insulating member 330 is formed in a plate shape and a first groove and a second groove are formed therein, and as shown in FIGS. 12 and 13, the first electrode plate 310 is coupled to the insulating member 330 to fill the first groove, and the second electrode plate 320 is coupled to the insulating member 330 to fill the second groove.

Here, the first and second grooves of the insulating member 330 are formed so that when the current collector 300 is disposed in the accommodation space 110, the first electrode plate 310 is electrically connected to a plurality of first electrode tabs 210 and the second electrode plate 320 is electrically connected to a plurality of second electrode tabs 220.

For example, the first groove may be formed so that, when the current collector 300 is disposed in the accommodation space 110, a portion of one surface of the first electrode plate 310 illustrated in FIG. 12 which fills the first groove comes into contact with the first electrode tab 210. Further, the second groove may be formed so that, when the current collector 300 is disposed in the accommodation space 110, a portion of one surface of the second electrode plate 320 illustrated in FIG. 12 which fills the second groove comes into contact with the second electrode tab 220.

By forming the current collector 300 as described above, the first electrode plate 310 and the first electrode tab 210 may be electrically connected while making contact over a relatively large area, and the second electrode plate 320 and the second electrode tab 220 may also be electrically connected while making contact over a relatively large area.

On the other hand, the first groove of the insulating member 330 may be formed so that the first electrode plate 310 and the first electrode tab 210 are electrically connected, but the first electrode plate 310 is prevented from coming into contact with other parts of the electrode assembly 200 other than the first electrode tab 210.

For example, the first groove may be formed so that, when the current collector 300 is disposed in the accommodation space 110, the entire portion of one surface of the first electrode plate 310 illustrated in FIG. 12 which fills the first groove comes into contact with the first electrode tab 210.

Further, the second groove of the insulating member 330 may also be formed so that the second electrode plate 320 and the second electrode tab 220 are electrically connected, but the second electrode plate 320 is prevented from coming into contact with other parts of the electrode assembly 200 other than the second electrode tab 220.

For example, the second groove may be formed so that, when the current collector 300 is disposed in the accommodation space 110, the entire portion of one surface of the second electrode plate 320 illustrated in FIG. 12 which fills the second groove comes into contact with the second electrode tab 220.

If the first and second grooves are formed as described above, it is possible to effectively prevent a short circuit from occurring between the first electrode plate 310 and the electrode assembly 200 or between the second electrode plate 320 and the electrode assembly 200.

In addition, as shown in FIG. 11, the first electrode plate 310 includes a first coupling part 311 and a first terminal part 312.

The first coupling part 311 is a portion which includes the portion of the first electrode plate 310 which fills the first groove.

The first terminal part 312 is a portion formed by being connected to the first coupling part 311 of the first electrode plate 310, and a first electrode protrusion 313 protruding in a direction toward the cap assembly 400 is formed. The first electrode protrusion 313 may protrude from the first terminal part 312 in a vertical direction.

Here, the first terminal part 312 may be formed to be thicker than the first coupling part 311 so as to more stably conduct current transmitted from the first coupling part 311.

FIG. 14 is a diagram illustrating a current collector so that a side perpendicular to one side and another side of the current collector can be seen.

Specifically, referring to FIG. 14, the first terminal part 312 may be formed such that a length L1 of the first terminal part 312 in a direction perpendicular to one surface of the first electrode plate 310 is longer than a length L2 of the first coupling part 311 in a direction perpendicular to one surface of the first electrode plate 310.

For example, the first coupling part 311 and the first terminal part 312 may be formed so that the length L2 of the first coupling part 311 in the direction perpendicular to the one surface of the first electrode plate 310 is 0.5 mm or less and the length L1 of the first terminal part 312 in the direction perpendicular to the one surface of the first electrode plate 310 is 1 mm or less.

Further, as shown in FIG. 11, the second electrode plate 320 includes a second coupling part 321 and a second terminal part 322.

The second coupling part 321 is a portion which includes the portion of the second electrode plate 320 which fills the second groove.

The second terminal part 322 is a portion formed by being connected to the second coupling part 321 of the second electrode plate 320, and a second electrode protrusion 323 protruding in a direction toward the cap assembly 400 is formed. The second electrode protrusion 323 may protrude from the second terminal part 322 in a vertical direction.

Similar to the first terminal part 312, the second terminal part 322 may be formed thicker than the second coupling part 321 so as to more stably conduct current transmitted from the second coupling part 321.

Specifically, referring to FIG. 14, the second terminal part 322 may be formed such that a length L3 of the second terminal part 322 in a direction perpendicular to one surface of the second electrode plate 320 is longer than a length L4 of the second coupling part 321 in a direction perpendicular to one surface of the second electrode plate 320.

For example, the second coupling part 321 and the second terminal part 322 may be formed so that the length L4 of the second coupling part 321 in the direction perpendicular to the one surface of the second electrode plate 320 is 0.5 mm or less, and the length L3 of the second terminal part 322 in the direction perpendicular to the one surface of the second electrode plate 320 is 1 mm or less.

In addition, as shown in FIG. 14, the first electrode plate 310 may be formed so that the first terminal part 312 is positioned further from the second electrode plate 320 than the first coupling part 311, and the second electrode plate 320 may be formed so that the second terminal part 322 is positioned further from the first electrode plate 310 than the second coupling part 321.

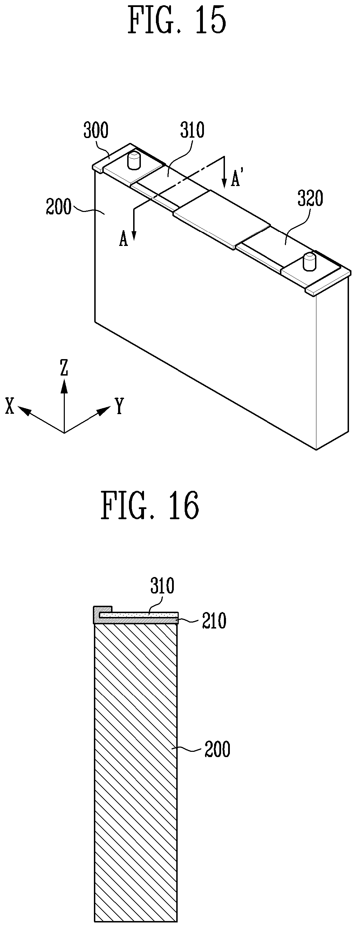

FIG. 15 is a perspective view illustrating an electrode assembly to which a current collector is coupled, and FIG. 16 is a cross-sectional diagram of the electrode assembly of FIG. 8 cut along line A-A', viewed along an X direction.

As shown in FIG. 15, when the current collector 300 is disposed in the accommodation space 110, the portion of one surface of the first electrode plate 310 which fills the first groove comes into contact with the plurality of first electrode tabs 210, and the portion of one surface of the second electrode plate 320 which fills the second groove comes into contact with a plurality of second electrode tabs 220.

Further, as shown in FIG. 16, a portion of the plurality of first electrode tabs 210 protruding outside the space between the first electrode plate 310 and the electrode assembly 200 may be folded and coupled to another surface of the first electrode plate 310 through laser welding or the like.

In addition, although not shown in the drawing, a portion of the plurality of second electrode tabs 220 protruding outside the space between the second electrode plate 320 and the electrode assembly 200 may also be folded and coupled to another surface of the second electrode plate 320 through laser welding or the like.

Even in case that the electrode assembly 200 includes the plurality of electrode tabs which are bent in opposite directions, it may be electrically stably connected to the current collector 300.

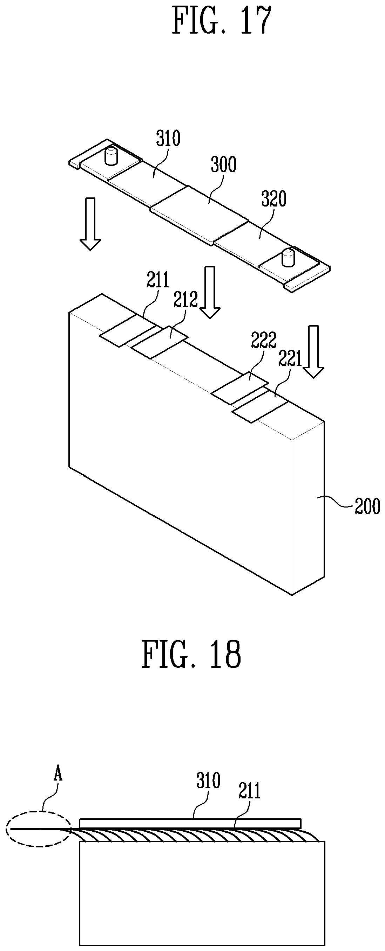

FIG. 17 is a diagram illustrating a current collector coupled to an electrode assembly including electrode tabs which are bent in opposite directions.

As shown in FIG. 17, in case that the electrode assembly 200 includes the plurality of first electrode tabs (211, 212) and a plurality of second electrode tabs (221, 222), the current collector 300 may be coupled to the electrode assembly 200 such that the first electrode plate 310 contacts the plurality of first electrode tabs (211, 212) and the second electrode plate 320 contacts the plurality of second electrode tabs (221, 222).

FIG. 18 is a diagram illustrating a state in which the first electrode tab bent in the first direction and the first electrode plate are in contact.

As shown in FIG. 18, when one of the first electrode tabs 211 bent in the first direction and the first electrode plate 310 come into contact, the first electrode non-coating parts (A) extending from the first electrodes arranged adjacent to the end in the first direction of the electrode assembly 200 among the plurality of first electrodes protrude in the first direction from the predetermined surface of the electrode assembly 200, and therefore do not come into contact with the first electrode plate 310.

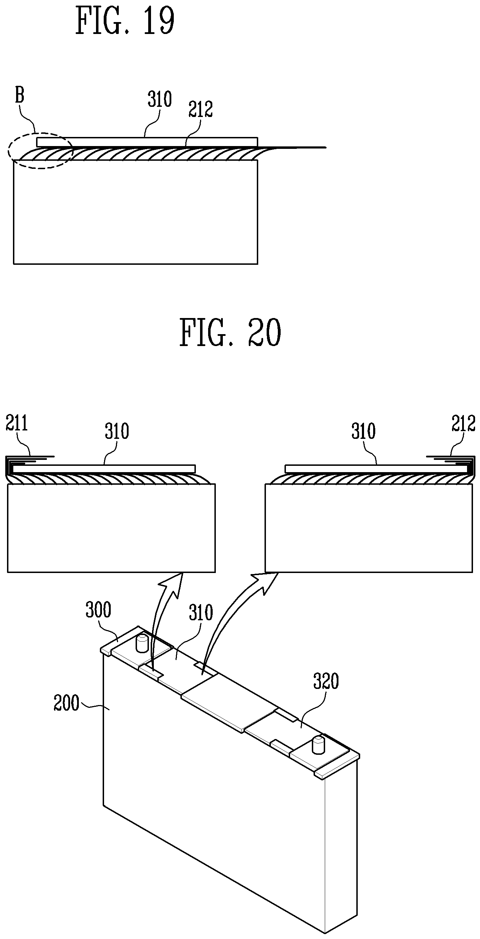

FIG. 19 is a drawing illustrating a state in which the first electrode tab which is bent in a direction opposite to the first direction and the first electrode plate are in contact.

However, as shown in FIG. 19, when another first electrode tab 212 bent in the opposite direction to the first direction and the first electrode plate 310 come into contact, the first electrode non-coating parts (B) extending from the first electrodes arranged adjacent to the end of the first direction of the electrode assembly 200 among the plurality of first electrodes are arranged on a predetermined surface of the electrode assembly 200, and therefore come into contact with the first electrode plate 310.

By bending the first electrode tabs 211 and 212 are bent in opposite directions, it is possible to prevent a phenomenon in which some of the first electrode non-coating parts extending from the first electrodes do not come into contact with the first electrode plate 310.

Similarly, by bending the second electrode tabs 221 and 222 in opposite directions, it is possible to prevent a phenomenon in which some of the second electrode non-coating parts extending from the second electrodes do not come into contact with the second electrode plate 320.

For example, a portion of the plurality of first electrode non-coating parts protruding from a predetermined surface of the electrode assembly 200 may be bent so as to sandwich the first electrode plate 310 and coupled with another surface of the first electrode plate 310, and a portion of the plurality of second electrode non-coating parts protruding from a predetermined surface of the electrode assembly 200 may be bent so as to sandwich the second electrode plate 320 and coupled with another surface of the second electrode plate 320.

FIG. 20 is a diagram illustrating an electrode tab protruding from an electrode assembly being bent and coupled to an electrode plate.

For example, as shown in FIG. 20, a portion of the plurality of first electrode non-coating parts of any one first electrode tab 211 protruding in the first direction from a predetermined surface of the electrode assembly 200 and a portion of the plurality of first electrode non-coating parts of another first electrode tab 212 protruding in the opposite direction to the first direction from a predetermined surface of the electrode assembly 200 may be each bent and coupled to the first electrode plate 310.

Even in case that the plurality of electrode assemblies 200 are stacked to form the electrode assembly stack, the electrode assembly stack may be electrically stably connected to the current collector 300.

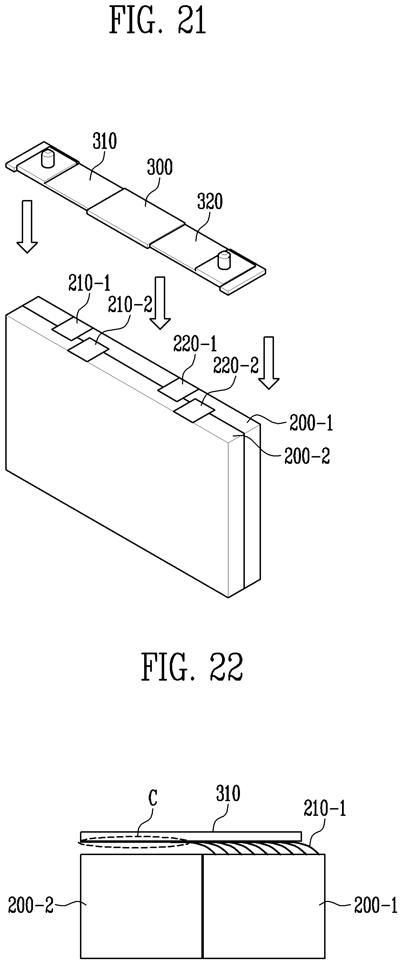

FIG. 21 is a diagram illustrating a current collector being coupled to an electrode assembly stack formed by stacking a plurality of electrode assemblies.

As shown in FIG. 21, in case that the current collector 300 is coupled to the electrode assembly stack formed by stacking the plurality of electrode assemblies 200, the current collector 300 may be coupled to the electrode assembly stack such that the first electrode plate 310 contacts the first electrode tabs (210-1, 210-2) of each electrode assembly (200-1, 200-2) and the second electrode plate 320 contacts the second electrode tabs (220-1, 220-2) of each electrode assembly (200-1, 200-2).

FIG. 22 is a diagram illustrating a state in which a first electrode tab of a first electrode assembly and a first electrode plate are in contact.

As shown in FIG. 22, the first electrode tab 210-1 of the first electrode assembly 200-1 is bent so that the plurality of first electrode non-coating parts move away from the edge of the electrode assembly stack, so that the first electrode non-coating parts (C) extending from the first electrodes arranged adjacent to the second electrode assembly 200-2 among the plurality of first electrodes of the first electrode assembly 200-1 are arranged on a predetermined surface of the second electrode assembly 200-2.

Because the current collector 300 is formed to be coupled to a predetermined surface of the first electrode assembly 200-1 and a predetermined surface of the second electrode assembly 200-1, the first electrode non-coating parts (C) arranged on the predetermined surface of the second electrode assembly 200-2 may also come into contact with the first electrode plate 310.

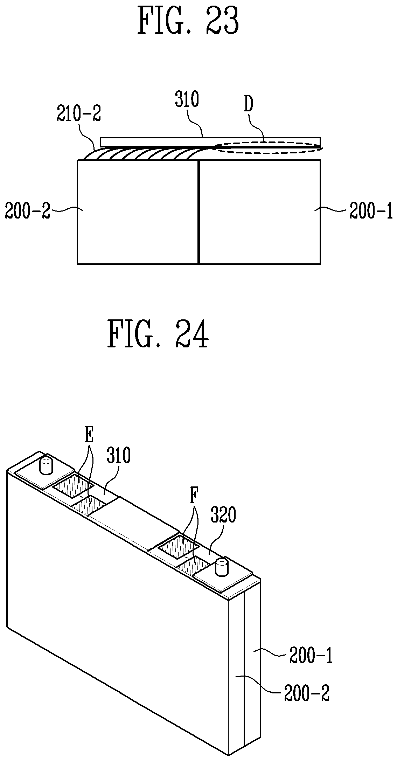

FIG. 23 is a diagram illustrating a state in which a first electrode tab of a second electrode assembly and a first electrode plate are in contact.

As shown in FIG. 23, the first electrode tab 210-2 of the second electrode assembly 200-2 is bent so that the plurality of first electrode non-coating parts move away from an edge of the electrode assembly stack, so that the first electrode non-coating parts (D) extending from the first electrodes arranged adjacent to the first electrode assembly 200-1 among the plurality of first electrodes of the second electrode assembly 200-2 are arranged on a predetermined surface of the first electrode assembly 200-1.

Because the current collector 300 is formed to be coupled to a predetermined surface of the first electrode assembly 200-1 and a predetermined surface of the second electrode assembly 200-2, the first electrode non-coating parts (D) arranged on the predetermined surface of the first electrode assembly 200-1 may also come into contact with the first electrode plate 310.

The principle of the configuration in which the second electrode tab 220-1 of the first electrode assembly 200-1 and the second electrode tab 220-2 of the second electrode assembly 200-2 and the second electrode plate 320 are in contact is the same as the principle of the configuration in which the first electrode tab 210-1 of the first electrode assembly 200-1 and the first electrode tab 210-2 of the second electrode assembly 200-2 and the first electrode plate 310, and therefore a detailed description thereof is omitted.

FIG. 24 is a diagram illustrating a current collector coupled to an electrode assembly stack.

As shown in FIG. 24, the current collector 300 may be coupled with the electrode assembly stack by irradiating a laser to portions (E) of another surface of the first electrode plate 310 located above the first electrode tabs (210-1, 210-2) and may be coupled with the electrode assembly stack by irradiating a laser to portions (F) of another surface of the second electrode plate 320 located above the second electrode tabs (220-1, 220-2).

Then, the cap assembly 400 is described.

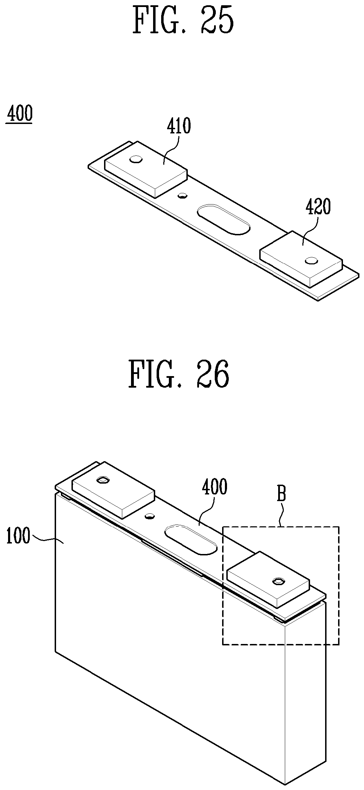

FIG. 25 is a perspective view illustrating a cap assembly.

Referred to FIG. 25, the cap assembly 400 may be formed to be coupled to the case 100 to seal the accommodation space 110, and includes a first electrode terminal 410 and a second electrode terminal 420.

FIG. 26 is a diagram illustrating a case to which a cap assembly is coupled.

Specifically, as shown in FIG. 26, the cap assembly 400 may be coupled to the case 100 so as to face the electrode assembly 200 with the current collector 300 interposed therebetween, thereby sealing the accommodation space 110. Here, the cap assembly 400 may be coupled to the case 100 by laser welding.

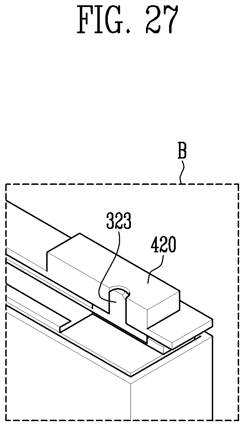

FIG. 27 is an enlarged view of part B of FIG. 26 with a portion cut off.

Here, as shown in FIG. 27, the second electrode terminal 420 is formed to expose at least a part of the second electrode plate 320, and the at least part of the second electrode plate 320 exposed by the second electrode terminal 420 may be the second electrode protrusion 323.

Although not shown in the drawing, the first electrode terminal 410 is also formed to expose at least a part of the first electrode plate 310, and the at least part of the first electrode plate 310 exposed by the first electrode terminal 410 may be the first electrode protrusion 313.

In the following, a method of manufacturing a battery cell according to an embodiment of the present disclosure is described.

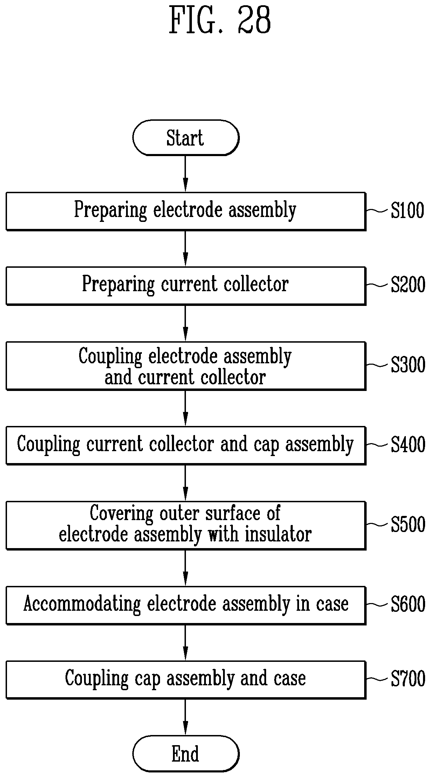

FIG. 28 is a flowchart illustrating a method of manufacturing a battery cell according to an embodiment of the present disclosure.

Referring to FIG. 28, the method of manufacturing a battery cell may include a first step of preparing an electrode assembly (S100), a second step of preparing a current collector (S200), a third step of coupling the electrode assembly and the current collector (S300), a fourth step of coupling the current collector and a cap assembly (S400), a fifth step of covering an outer surface of the electrode assembly with an insulator (S500), a sixth step of accommodating the electrode assembly in a case (S600), and a seventh step of coupling the cap assembly and the case (S700).

First, the first step (S100) is described.

The first step (S100) is a step of preparing the electrode assembly 200. The preparation of the electrode assembly 200 includes manufacturing of the electrode assembly 200.

Specifically, the first step (S100) is a step of preparing the electrode assembly 200 including the plurality of first electrodes electrically connected to the first electrode tab 210 and the plurality of second electrodes electrically connected to the second electrode tab 220 alternately stacked, and the configuration of the electrode assembly 200 prepared in the first step (S100) is the same as the configuration of the electrode assembly 200 described with respect to the battery cell 1 according to an embodiment of the present disclosure.

Then, the second step (S200) is described.

The second step (S200) is a step of preparing the current collector 300. The preparation of the current collector 300 includes manufacturing of the current collector 300.

Specifically, the second step (S200) is a step of preparing the current collector 300 including the first electrode plate 310, the second electrode plate 320, and the insulating member 330 which is coupled to at least a part of the first electrode plate 310 and at least a part of the second electrode plate 320, and the configuration of the current collector 300 prepared in the second step S200 is the same as the configuration of the current collector 300 described with respect to the battery cell 1 according to an embodiment of the present disclosure.

Then, the third step (S300) is described.

The third step (S300) is a step of coupling the electrode assembly 200 and the current collector 300.

Specifically, the third step (S300) is a step of electrically connecting the first electrode tab 210 and the first electrode plate 310 and electrically connecting the second electrode tab 220 and the second electrode plate 320 to couple the electrode assembly 200 and the current collector 300.

Here, as described above, the first electrode plate 310 and the first electrode tab 210 may be electrically connected while making contact over a relatively large area, and the second electrode plate 320 and the second electrode tab 220 may also be electrically connected while making contact over a relatively large area.

In addition, since the current collector 300 is formed of the insulating member 330 having an insulating function except for the portion in contact with the first electrode tab 210 and the portion in contact with the second electrode tab 220, the third step S300 may couple the electrode assembly 200 and the current collector 300 without going through a process of disposing a separate insulator between the electrode assembly 200 and the current collector 300.

Then, the fourth step (S400) is described.

The fourth step (S400) is a step of coupling the current collector 300 and the cap assembly 400. A configuration of the cap assembly 400 is the same as that of the cap assembly 400 described with respect to the battery cell 1 according to an embodiment of the present disclosure.

Specifically, the fourth step (S400) is a step of coupling the cap assembly 400 including the first electrode terminal 410 and the second electrode terminal 420 with the current collector 300 such that at least a part of the first electrode plate 310 is exposed through the first electrode terminal 410 and at least a part of the second electrode plate 320 is exposed through the second electrode terminal 420.

By performing the fifth step (S500) to seventh step (S700) described below after performing the first step (S100) to fourth step (S400) described above, the electrode assembly and the current collector may be accommodated in the accommodation space of the case, and the cap assembly may be coupled to the case to seal the accommodation space.

Then, the fifth step (S500) is described.

The fifth step (S500) is a step of covering a plurality of surfaces of the outer surface of the electrode assembly 200 with an insulator 500.

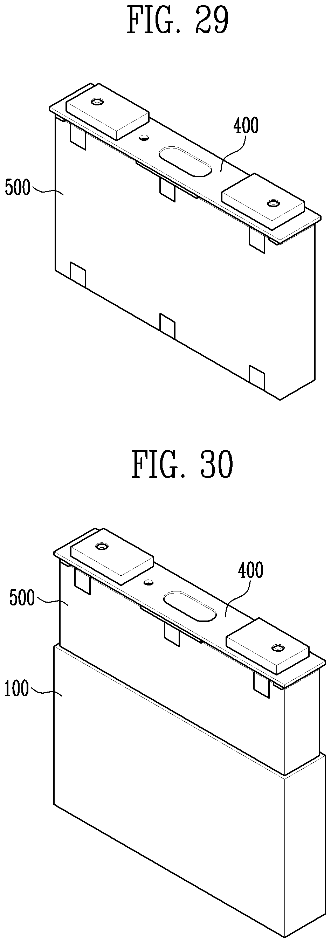

FIG. 29 is a diagram illustrating the fifth step.

Specifically, as shown in FIG. 29, the fifth step S500 is a step of covering the remaining surfaces of the electrode assembly 200 with the insulator 500 among the plurality of surfaces of the electrode assembly 200 except for a predetermined surface where the first electrode tab 210 and the second electrode tab 220 are coupled. Here, the insulator 500 is formed as a conventional insulating member having an insulating function to prevent current from flowing.

Then, the sixth step (S600) is described.

The sixth step (S600) is a step of coupling the cab assembly 400 and the case 100.

FIG. 30 is a diagram illustrating the sixth step.

Specifically, as shown in FIG. 30, the sixth step (S600) is a step of inserting the electrode assembly 200 covered with the insulator 500 into the case 100 and then coupling the cap assembly 400 and the case 100 to seal the accommodation space 110.

Here, the cap assembly 400 may be coupled to the case 100 by laser welding or the like.

As described above, the battery cell and the method of manufacturing the same according to the present disclosure are configured such that a portion of the electrode plate coupled to the insulating member in which the groove is formed filling the groove is in contact with the electrode tab, providing an effect in which the contact area between the electrode tab and the electrode plate of the current collector is relatively increased, thereby enabling the electrode tab and the current collector to be electrically more stably connected.

In addition, the electrode tab formed by the non-coating part is bent in a predetermined direction and configured to be in stable contact with the current collector, thus providing an effect of allowing the electrode tab and the current collector to be electrically more stably connected.

In addition, the battery cell may be manufactured without going through a process for installing an insulator between the electrode assembly and the current collector, thus providing an effect of manufacturing the battery cell through a more simplified process.

Aspect 1. A battery cell (1) comprising, a case (100) with one side open and an accommodation space (110) formed inside, E, a current collector (300) comprising a first electrode plate (310) electrically connected to the first electrode tab (210) and a second electrode plate (320) electrically connected to the second electrode tab (220), and disposed in the accommodation space (110) and a cap assembly (400) coupled to the one side of the case (100) to seal the accommodation space (110) and exposing at least a part of the first electrode plate (310) and at least a part of the second electrode plate (320), wherein the first electrode tab (210) is coupled to the electrode assembly (200) so as to be disposed on a predetermined surface facing the current collector (300) among a plurality of surfaces of the electrode assembly (200), and the second electrode tab (220) is coupled to the electrode assembly (200) so as to be spaced apart from the first electrode tab (210) by a predetermined distance and disposed on the predetermined surface of the electrode assembly (200).

Aspect 2. The battery cell (1) according to aspect 1, wherein the current collector (300) comprises an insulating member (330) which is coupled to at least a part of the first electrode plate (310) and at least a part of the second electrode plate (320).

Aspect 3. The battery cell (1) according to aspect 2, wherein the insulating member (330) is formed in a plate shape and has a first groove and a second groove formed therein, the first electrode plate (310) is coupled to the insulating member (330) to fill the first groove, and the second electrode plate (320) is coupled to the insulating member (330) to fill the second groove.

Aspect 4. The battery cell (1) according to aspect 3, wherein the first groove is formed so that a portion of one surface of the first electrode plate (310) which fills the first groove comes into contact with the first electrode tab (210), and the second groove is formed so that a portion of one surface of the second electrode plate (320) which fills the second groove comes into contact with the second electrode tab (220).

Aspect 5. The battery cell (1) according to aspect 3 or 4, wherein the first electrode tab (210) comprises a first electrode non-coating part of each of the first electrodes, and the second electrode tab (220) comprises a second electrode non-coating part of each of the second electrodes, the electrode assembly (200) comprises a plurality of the first electrode tabs (210) and a plurality of the second electrode tabs (220), the plurality of first electrode non-coating parts of one or more of the plurality of first electrode tabs (210) are bent in a first direction in which the plurality of first electrodes and the plurality of second electrodes are stacked, and the plurality of first electrode non-coating parts of the remainder of the plurality of first electrode tabs (210) are bent in a second direction which is opposite to the first direction, and the plurality of second electrode non-coating parts of one or more of the plurality of second electrode tabs (220) are bent in the first direction, and the plurality of second electrode non-coating parts of the remainder of the plurality of second electrode tabs (220) are bent in the second direction.

Aspect 6. The battery cell according to aspect 5, wherein a portion protruding from the predetermined surface of the plurality of first electrode non-coating parts is bent so as to sandwich the first electrode plate (310) and coupled to another surface of the first electrode plate (310), and a portion protruding from the predetermined surface of the plurality of second electrode non-coating parts is bent so as to sandwich the second electrode plate (320) and coupled to another surface of the second electrode plate (320).

Aspect 7. The battery cell (1) according to aspect 3 or 4, wherein a plurality of the electrode assemblies (200) are stacked to form an electrode assembly stack and placed in the accommodation space (110), the first electrode tab (210) comprises a first electrode non-coating part of each of the first electrodes, and the second electrode tab (220) comprises a second electrode non-coating part of each of the second electrodes, the first electrode tab (210) of each of the electrode assemblies is bent so that the plurality of first electrode non-coating parts move away from an edge of the electrode assembly stack, and the second electrode tab (220) of each of the electrode assemblies is bent so that the plurality of second electrode non-coating parts move away from an edge of the electrode assembly stack.

Aspect 8. The battery cell (1) according to aspect 7, wherein the electrode assembly stack is formed such that the first electrode tab (210) and the second electrode tab (220) of an electrode assembly (200) selected from the plurality of electrode assemblies (200) are prevented from being opposed to the first electrode tab (210) and the second electrode tab (220) of the electrode assembly (200) adjacent to the selected electrode assembly (200).

Aspect 9. The battery cell (1) according to aspect 4, wherein the first groove is formed so that the entire portion of the one surface of the first electrode plate (310) which fills the first groove comes into contact with the first electrode tab (210), and the second groove is formed so that the entire portion of the one surface of the second electrode plate (320) which fills the second groove comes into contact with the second electrode tab (220).

Aspect 10. The battery cell (1) according to any one of aspects 4 to 8, wherein the first electrode plate (310) comprises, a first coupling part (311) comprising the portion filling the first groove and a first terminal part (312) formed by being connected to the first coupling part (311) and having a first electrode (313) protrusion formed to protrude in a direction toward the cap assembly (400), and the second electrode plate (320) comprises, a second coupling part (321) comprising the portion filling the second groove and a second terminal part (322) formed by being connected to the second coupling part (321) and having a second electrode protrusion (323) formed to protrude in a direction toward the cap assembly (400).

Aspect 11. The battery cell (1) according to aspect 10, wherein the first electrode protrusion (313) is formed to protrude from the first terminal part (312) in a vertical direction, and the second electrode protrusion (323) is formed to protrude from the second terminal part (322) in a vertical direction.

Aspect 12. The battery cell (1) according to aspect 10 or 11, wherein a length of the first terminal part (312) in a direction perpendicular to one surface of the first electrode plate (310) is longer than a length of the first coupling part (311) in a direction perpendicular to one surface of the first electrode plate (310), and a length of the second terminal part (322) in a direction perpendicular to one surface of the second electrode plate (320) is longer than a length of the second coupling part (321) in a direction perpendicular to one surface of the second electrode plate (320).

Aspect 13. The battery cell (1) according to aspect 12, wherein the length of the first coupling part (311) in the direction perpendicular to the one surface of the first electrode plate (310) and the length of the second coupling part (321) in the direction perpendicular to the one surface of the second electrode plate (320) are 0.5 mm or less, and the length of the first terminal part (312) in the direction perpendicular to the one surface of the first electrode plate (310) and the length of the second terminal part (322) in the direction perpendicular to the one surface of the second electrode plate (320) are 1 mm or less.

Aspect 14. The battery cell (1) according to any one of aspects 10 to 12, wherein the first electrode plate (310) is formed so that the first terminal part (312) is positioned further from the second electrode plate (320) than the first coupling part (311), and the second electrode plate (320) is formed so that the second terminal part (322) is positioned further from the first electrode plate (310) than the second coupling part (321).

Aspect 15. A method of manufacturing a battery cell (1), the method comprising, a first step of preparing an electrode assembly (200) comprising a plurality of first electrodes electrically connected to a first electrode tab (210) and a plurality of second electrodes electrically connected to a second electrode tab (220), which are alternately stacked, a second step of preparing a current collector (300) which comprises a first electrode plate (310) and a second electrode plate (320), a third step of electrically connecting the first electrode tab (210) and the first electrode plate (310) and electrically connecting the second electrode tab (220) and the second electrode plate (320) to couple the electrode assembly (200) and the current collector (300) and a fourth step of connecting a cap assembly (400) comprising a first electrode terminal (410) and a second electrode terminal (420) to the current collector (300) so that at least a part of the first electrode plate (310) is exposed through the first electrode terminal (410) and at least a part of the second electrode plate (320) is exposed through the second electrode terminal (420), wherein the electrode assembly (200) and the current collector (300) are accommodated in an accommodation space (110) of a case (100), and the cap assembly (400) is coupled to the case (100) to seal the accommodation space (110), the first electrode tab (210) is coupled to the electrode assembly (200) so as to be disposed on a predetermined surface facing the current collector (300) of a plurality of surfaces of the electrode assembly (200), and the second electrode tab (220) is coupled to the electrode assembly (200) so as to be spaced apart from the first electrode tab (210) by a predetermined distance and disposed on the predetermined surface of the electrode assembly (200).

Aspect 16. The method according to aspect 15, wherein the current collector (300) comprises an insulating member (330) coupled to at least a part of the first electrode plate (310) and at least a part of the second electrode plate (320).

Aspect 17. The method according to aspect 16, wherein the insulating member (330) is formed in a plate shape and has a first groove and a second groove formed therein, the first electrode plate (310) is coupled to the insulating member (330) to fill the first groove, and the second electrode plate (320) is coupled to the insulating member (330) to fill the second groove.

Aspect 18. The method according to aspect 17, wherein the first groove is formed so that a portion of one surface of the first electrode plate (310) which fills the first groove comes into contact with the first electrode tab (210), and the second groove is formed so that a portion of one surface of the second electrode plate (320) which fills the second groove comes into contact with the second electrode tab (220).

Aspect 19. The method according to aspect 17 or 18, wherein the first groove is formed so that the entire portion of the one surface of the first electrode plate (310) which fills the first groove comes into contact with the first electrode tab (210), and the second groove is formed so that the entire portion of the one surface of the second electrode plate (320) which fills the second groove comes into contact with the second electrode tab (220).

Aspect 20. The method according to any one of aspects 17 to 19, wherein the first electrode tab (210) comprises a first electrode non-coating part of each of the first electrodes, and the second electrode tab (220) comprises a second electrode non-coating part of each of the second electrodes, the electrode assembly (200) comprises a plurality of the first electrode tabs (210) and a plurality of the second electrode tabs (220), the plurality of first electrode non-coating parts of one or more of the plurality of first electrode tabs (210) are bent in a first direction in which the plurality of first electrodes and the plurality of second electrodes are stacked, and the plurality of first electrode non-coating parts of the remainder of the plurality of first electrode tabs (210) are bent in a second direction which is opposite to the first direction, and the plurality of second electrode non-coating parts of one or more of the plurality of second electrode tabs (220) are bent in the first direction, and the plurality of second electrode non-coating parts of the remainder of the plurality of second electrode tabs (220) are bent in the second direction.

Aspect 21. The method according to aspect 20, wherein a portion protruding from the predetermined surface of the plurality of first electrode non-coating parts is bent so as to sandwich the first electrode plate (310) and coupled to another surface of the first electrode plate (310), and a portion protruding from the predetermined surface of the plurality of second electrode non-coating parts is bent so as to sandwich the second electrode plate (320) and coupled to another surface of the second electrode plate (320).

Aspect 22. The method according to any one of aspects 17 to 19, wherein a plurality of the electrode assemblies (200) are stacked to form an electrode assembly stack and placed in the accommodation space (110), the first electrode tab (210) comprises a first electrode non-coating part of each of the first electrodes, and the second electrode tab (220) comprises a second electrode non-coating part of each of the second electrodes, the first electrode tab (210) of each of the electrode assemblies (200) is bent so that the plurality of first electrode non-coating parts move away from an edge of the electrode assembly stack, and the second electrode tab (220) of each of the electrode assemblies (200) is bent so that the plurality of second electrode non-coating parts move away from an edge of the electrode assembly stack.

Aspect 23. The method according to aspect 22, wherein the electrode assembly stack is formed such that the first electrode tab (210) and the second electrode tab (220) of an electrode assembly (200) selected from the plurality of electrode assemblies (200) are prevented from being opposed to the first electrode tab (210) and the second electrode tab (220) of the electrode assembly (200) adjacent to the selected electrode assembly (200).

The above description of the present disclosure is for illustrative purposes only, and a person skilled in the art to which the present disclosure pertains will understand that the present disclosure may be easily modified into other specific forms without changing the technical idea or essential features of the present disclosure. Therefore, it should be understood that the embodiments described above are exemplary in all respects and not limiting. For example, each component described as a single entity may be implemented in a distributed manner, and likewise, components described as distributed may be implemented in a combined manner.

The scope of the present disclosure is indicated by the appended claims rather than the detailed description above, and all changes or modifications derived from the meaning and scope of the claims and their equivalent concepts should be construed as being included in the scope of the present disclosure.

## Claims

1. A battery cell (1) comprising:
a case (100) with one side open and an accommodation space (110) formed inside;
an electrode assembly (200) comprising a plurality of first electrodes electrically connected to a first electrode tab (210) and a plurality of second electrodes electrically connected to a second electrode tab (220), which are alternately stacked, and disposed in the accommodation space (110);
a current collector (300) comprising a first electrode plate (310) electrically connected to the first electrode tab (210) and a second electrode plate (320) electrically connected to the second electrode tab (220), and disposed in the accommodation space (110); and
a cap assembly (400) coupled to the one side of the case (100) to seal the accommodation space (110) and exposing at least a part of the first electrode plate (310) and at least a part of the second electrode plate (320),
wherein the first electrode tab (210) is coupled to the electrode assembly (200) so as to be disposed on a predetermined surface facing the current collector (300) among a plurality of surfaces of the electrode assembly (200), and
the second electrode tab (220) is coupled to the electrode assembly (200) so as to be spaced apart from the first electrode tab (210) by a predetermined distance and disposed on the predetermined surface of the electrode assembly (200).

2. The battery cell (1) according to claim 1, wherein the current collector (300) comprises an insulating member (330) which is coupled to at least a part of the first electrode plate (310) and at least a part of the second electrode plate (320).

3. The battery cell (1) according to claim 2, wherein the insulating member (330) is formed in a plate shape and has a first groove and a second groove formed therein,
the first electrode plate (310) is coupled to the insulating member (330) to fill the first groove, and
the second electrode plate (320) is coupled to the insulating member (330) to fill the second groove;
preferably wherein the first groove is formed so that a portion of one surface of the first electrode plate (310) which fills the first groove comes into contact with the first electrode tab (210), and
the second groove is formed so that a portion of one surface of the second electrode plate (320) which fills the second groove comes into contact with the second electrode tab (220).

4. The battery cell (1) according to any one of claims 1 to 3, wherein the first electrode tab (210) comprises a first electrode non-coating part of each of the first electrodes, and the second electrode tab (220) comprises a second electrode non-coating part of each of the second electrodes,
the electrode assembly (200) comprises a plurality of the first electrode tabs (210) and a plurality of the second electrode tabs (220),
the plurality of first electrode non-coating parts of one or more of the plurality of first electrode tabs (210) are bent in a first direction in which the plurality of first electrodes and the plurality of second electrodes are stacked, and the plurality of first electrode non-coating parts of the remainder of the plurality of first electrode tabs (210) are bent in a second direction which is opposite to the first direction, and
the plurality of second electrode non-coating parts of one or more of the plurality of second electrode tabs (220) are bent in the first direction, and the plurality of second electrode non-coating parts of the remainder of the plurality of second electrode tabs (220) are bent in the second direction.

5. The battery cell according to any one of claims 1 to 4, wherein a portion protruding from the predetermined surface of the plurality of first electrode non-coating parts is bent so as to sandwich the first electrode plate (310) and coupled to another surface of the first electrode plate (310), and
a portion protruding from the predetermined surface of the plurality of second electrode non-coating parts is bent so as to sandwich the second electrode plate (320) and coupled to another surface of the second electrode plate (320).

6. The battery cell (1) according to any one of claims 1 to 5, wherein a plurality of the electrode assemblies (200) are stacked to form an electrode assembly stack and placed in the accommodation space (110),
the first electrode tab (210) comprises a first electrode non-coating part of each of the first electrodes, and the second electrode tab (220) comprises a second electrode non-coating part of each of the second electrodes,
the first electrode tab (210) of each of the electrode assemblies is bent so that the plurality of first electrode non-coating parts move away from an edge of the electrode assembly stack, and
the second electrode tab (220) of each of the electrode assemblies is bent so that the plurality of second electrode non-coating parts move away from an edge of the electrode assembly stack;
preferably wherein the electrode assembly stack is formed such that the first electrode tab (210) and the second electrode tab (220) of an electrode assembly (200) selected from the plurality of electrode assemblies (200) are prevented from being opposed to the first electrode tab (210) and the second electrode tab (220) of the electrode assembly (200) adjacent to the selected electrode assembly (200).

7. The battery cell (1) according to any one of claims 3 to 6, wherein the first groove is formed so that the entire portion of the one surface of the first electrode plate (310) which fills the first groove comes into contact with the first electrode tab (210), and
the second groove is formed so that the entire portion of the one surface of the second electrode plate (320) which fills the second groove comes into contact with the second electrode tab (220).

8. The battery cell (1) according to any one of claims1 to 7, wherein the first electrode plate (310) comprises:
a first coupling part (311) comprising the portion filling the first groove; and
a first terminal part (312) formed by being connected to the first coupling part (311) and having a first electrode (313) protrusion formed to protrude in a direction toward the cap assembly (400), and
the second electrode plate (320) comprises:
a second coupling part (321) comprising the portion filling the second groove; and
a second terminal part (322) formed by being connected to the second coupling part (321) and having a second electrode protrusion (323) formed to protrude in a direction toward the cap assembly (400).

9. The battery cell (1) according to claim 8, wherein the first electrode protrusion (313) is formed to protrude from the first terminal part (312) in a vertical direction, and
the second electrode protrusion (323) is formed to protrude from the second terminal part (322) in a vertical direction;
preferably wherein a length of the first terminal part (312) in a direction perpendicular to one surface of the first electrode plate (310) is longer than a length of the first coupling part (311) in a direction perpendicular to one surface of the first electrode plate (310), and
a length of the second terminal part (322) in a direction perpendicular to one surface of the second electrode plate (320) is longer than a length of the second coupling part (321) in a direction perpendicular to one surface of the second electrode plate (320);
more preferably wherein the length of the first coupling part (311) in the direction perpendicular to the one surface of the first electrode plate (310) and the length of the second coupling part (321) in the direction perpendicular to the one surface of the second electrode plate (320) are 0.5 mm or less, and
the length of the first terminal part (312) in the direction perpendicular to the one surface of the first electrode plate (310) and the length of the second terminal part (322) in the direction perpendicular to the one surface of the second electrode plate (320) are 1 mm or less.

10. The battery cell (1) according to claim 8 or 9, wherein the first electrode plate (310) is formed so that the first terminal part (312) is positioned further from the second electrode plate (320) than the first coupling part (311), and
the second electrode plate (320) is formed so that the second terminal part (322) is positioned further from the first electrode plate (310) than the second coupling part (321).

11. A method of manufacturing a battery cell (1), the method comprising:
a first step of preparing an electrode assembly (200) comprising a plurality of first electrodes electrically connected to a first electrode tab (210) and a plurality of second electrodes electrically connected to a second electrode tab (220), which are alternately stacked;
a second step of preparing a current collector (300) which comprises a first electrode plate (310) and a second electrode plate (320);
a third step of electrically connecting the first electrode tab (210) and the first electrode plate (310) and electrically connecting the second electrode tab (220) and the second electrode plate (320) to couple the electrode assembly (200) and the current collector (300); and
a fourth step of connecting a cap assembly (400) comprising a first electrode terminal (410) and a second electrode terminal (420) to the current collector (300) so that at least a part of the first electrode plate (310) is exposed through the first electrode terminal (410) and at least a part of the second electrode plate (320) is exposed through the second electrode terminal (420),
wherein the electrode assembly (200) and the current collector (300) are accommodated in an accommodation space (110) of a case (100), and the cap assembly (400) is coupled to the case (100) to seal the accommodation space (110),
the first electrode tab (210) is coupled to the electrode assembly (200) so as to be disposed on a predetermined surface facing the current collector (300) of a plurality of surfaces of the electrode assembly (200), and
the second electrode tab (220) is coupled to the electrode assembly (200) so as to be spaced apart from the first electrode tab (210) by a predetermined distance and disposed on the predetermined surface of the electrode assembly (200).

12. The method according to claim 11, wherein the current collector (300) comprises an insulating member (330) coupled to at least a part of the first electrode plate (310) and at least a part of the second electrode plate (320).

13. The method according to claim 12, wherein the insulating member (330) is formed in a plate shape and has a first groove and a second groove formed therein,
the first electrode plate (310) is coupled to the insulating member (330) to fill the first groove, and
the second electrode plate (320) is coupled to the insulating member (330) to fill the second groove;
preferably wherein the first groove is formed so that a portion of one surface of the first electrode plate (310) which fills the first groove comes into contact with the first electrode tab (210), and
the second groove is formed so that a portion of one surface of the second electrode plate (320) which fills the second groove comes into contact with the second electrode tab (220);
more preferably wherein the first groove is formed so that the entire portion of the one surface of the first electrode plate (310) which fills the first groove comes into contact with the first electrode tab (210), and
the second groove is formed so that the entire portion of the one surface of the second electrode plate (320) which fills the second groove comes into contact with the second electrode tab (220).

14. The method according to any one of claims 11 to 13, wherein the first electrode tab (210) comprises a first electrode non-coating part of each of the first electrodes, and the second electrode tab (220) comprises a second electrode non-coating part of each of the second electrodes,
the electrode assembly (200) comprises a plurality of the first electrode tabs (210) and a plurality of the second electrode tabs (220),
the plurality of first electrode non-coating parts of one or more of the plurality of first electrode tabs (210) are bent in a first direction in which the plurality of first electrodes and the plurality of second electrodes are stacked, and the plurality of first electrode non-coating parts of the remainder of the plurality of first electrode tabs (210) are bent in a second direction which is opposite to the first direction, and
the plurality of second electrode non-coating parts of one or more of the plurality of second electrode tabs (220) are bent in the first direction, and the plurality of second electrode non-coating parts of the remainder of the plurality of second electrode tabs (220) are bent in the second direction;
preferably wherein a portion protruding from the predetermined surface of the plurality of first electrode non-coating parts is bent so as to sandwich the first electrode plate (310) and coupled to another surface of the first electrode plate (310), and
a portion protruding from the predetermined surface of the plurality of second electrode non-coating parts is bent so as to sandwich the second electrode plate (320) and coupled to another surface of the second electrode plate (320).

15. The method according to any one of claims 11 to 14, wherein a plurality of the electrode assemblies (200) are stacked to form an electrode assembly stack and placed in the accommodation space (110),
the first electrode tab (210) comprises a first electrode non-coating part of each of the first electrodes, and the second electrode tab (220) comprises a second electrode non-coating part of each of the second electrodes,
the first electrode tab (210) of each of the electrode assemblies (200) is bent so that the plurality of first electrode non-coating parts move away from an edge of the electrode assembly stack, and
the second electrode tab (220) of each of the electrode assemblies (200) is bent so that the plurality of second electrode non-coating parts move away from an edge of the electrode assembly stack;
preferably wherein the electrode assembly stack is formed such that the first electrode tab (210) and the second electrode tab (220) of an electrode assembly (200) selected from the plurality of electrode assemblies (200) are prevented from being opposed to the first electrode tab (210) and the second electrode tab (220) of the electrode assembly (200) adjacent to the selected electrode assembly (200).
